# EUROPEAN PATENT APPLICATION

(11) **EP 3 219 372 A2**
(43) Date of publication of application: **20.09.2017**
(21) Application number: 17158013.7
(22) Date of filing: 25.02.2017
(51) Int. Cl.: B01D 35/147, B01D 29/15

(54) **PRE-FILTER WITH A DETACHABLE FILTER CORE FOR UN-INTERRUPTIBLE WATER SUPPLY**

(30) Priority: 18.03.2016 CN 201610154489
(71) Applicant: Xiamen Runner Industrial Corporation, Xiamen 361021 (CN)
(72) Inventor: Liu, Hui-Ming, Xiamen 361021 (CN); Li, Jing-Ming, Xiamen 361021 (CN); Liang, De-Sheng, Xiamen 361021 (CN)
(74) Representative: Lang, Christian

(57) **Abstract**

A pre-filter with a detachable filter core for un-interruptible water supply has a valve seat (100), a filter canister (200) and a valve member (300). The filter canister (200) is detachably attached to a bottom of the valve seat (100), and the valve member (300) is mounted inside the valve seat (100). The pre-filter has a filtering position and a bypass position selected by turning the valve member (300). When n the filtering position, incoming water from an inlet port of the pre-filter is directed to the filter canister (200) to remove sediment and impurities contained in the water. When in the bypass position, the incoming water is prevented from entering the filter canister (200) and directly passes through the valve member (300) and flows to an outlet port of the pre-filter so that the filter canister (200) can be cleaned and replaced without interrupting water supply.

## Description

### BACKGROUND OF THE INVENTION

### 1. Field of the Invention

The present invention relates to a water bypass device and, more particularly, to a pre-filter with a detachable filter core for un-interruptible water supply.

### 2. Description of the Related Art

Residential water typically carries sediment and other impurities. The sediment and impurities accumulated on the filtering tube in the filter cartridge reduce the filtration capacity of the filter. The filter cartridge needs to be replaced when the filtration capacity is low. In conventional filter systems, the incoming water flow needs to be stopped each time the filter is replaced. Such stoppage of water is inconvenient and burdensome when water is needed for cleaning works in the household, such as for showering and washing clothes. There is a problem with the replacement of filter cartridge as filter to be replaced is not readily available, and the water supply could be interrupted for longer periods of time.

### SUMMARY OF THE INVENTION

An objective of the present invention is to provide a pre-filter with a detachable filter core for un-interruptible water supply targeting at providing a pre-filter with water supply un-interrupted by removal of the filter core as a result of cleaning or replacement.

To achieve the foregoing objective, the pre-filter with a detachable filter core for un-interruptible water supply includes a valve seat, a filter canister and a switching mechanism.

The valve seat includes an inlet port and an outlet port.

The filter canister detachably attached to a bottom of the valve seat and has a chamber, a filtered water outlet and an inlet water chamber.

The chamber is defined within the filter canister.

The filtering tube is hollow and is mounted inside the chamber of the filter canister.

The filtered water outlet is formed through a top end of the filtering tube.

The inlet water chamber is defined between the inner wall of the chamber of the filter canister and a peripheral wall of the filtering tube.

The switching mechanism is rotatably mounted into the valve seat.

The switching mechanism is selectively switched to form a filtering position with the inlet port of the valve seat communicating with the inlet water chamber of the filter canister and the filtered water outlet of the filter canister communicating with the outlet port of the valve seat, and the switching mechanism is selectively switched to form a bypass position with the inlet port of the valve seat directly communicating with the outlet port of the valve seat.

According to the foregoing description, the pre-filter has the following advantages: The inlet port of the pre-filter is not required to be closed in the event of cleaning or replacement of the filter core, and all it needs is to switch to a bypass water flow path to continuously supply water without causing interruption in household water supply when the filter core is cleaned or replaced.

Other objectives, advantages and novel features of the invention will become more apparent from the following detailed description when taken in conjunction with the accompanying drawings.

### BRIEF DESCRIPTION OF THE DRAWINGS

Fig. 1 is an exploded perspective view of an embodiment 1 of a pre-filter with a detachable filter core for un-interruptible water supply in accordance with the present invention;
Fig. 2 is an exploded perspective view of an embodiment 2 of a pre-filter with a detachable filter core for un-interruptible water supply in accordance with the present invention;
Fig. 3 is an operational cross-section view of the pre-filter in FIG. 1 showing a first water flow path;
Fig. 4 is an operational cross-section view of the pre-filter in FIG. 1 showing a second water flow path;
Fig. 5 is a perspective view of a valve member of the pre-filter in FIG. 1;
Fig. 6 is a cross-section view of the valve member of the pre-filter in FIG. 5;
Fig. 7 is another cross-section view of the valve member of the pre-filter in FIG. 5;
Fig. 8 is a cross-section view of the pre-filter in FIG. 2 filtering position showing a first water flow path;
Fig. 9 is another cross-section view of the pre-filter in FIG. 2 showing a second water flow path;
Fig. 10 is a cross-sectional view of a valve member of the pre-filter in FIG. 2;
Fig. 11 is an exploded perspective view of the valve member of the pre-filter in FIG. 10; and
Fig. 12 is another exploded perspective view of the valve member of the pre-filter in FIG. 10.

### DETAILED DESCRIPTION OF THE INVENTION

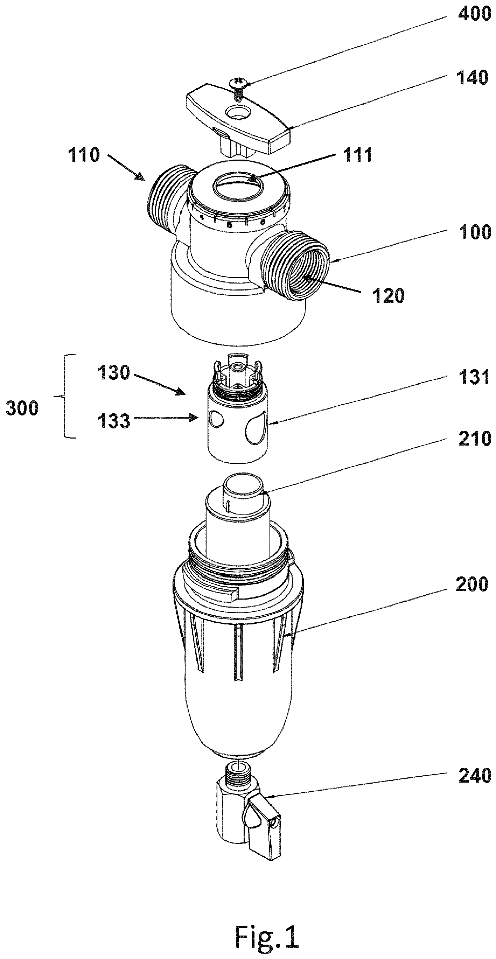

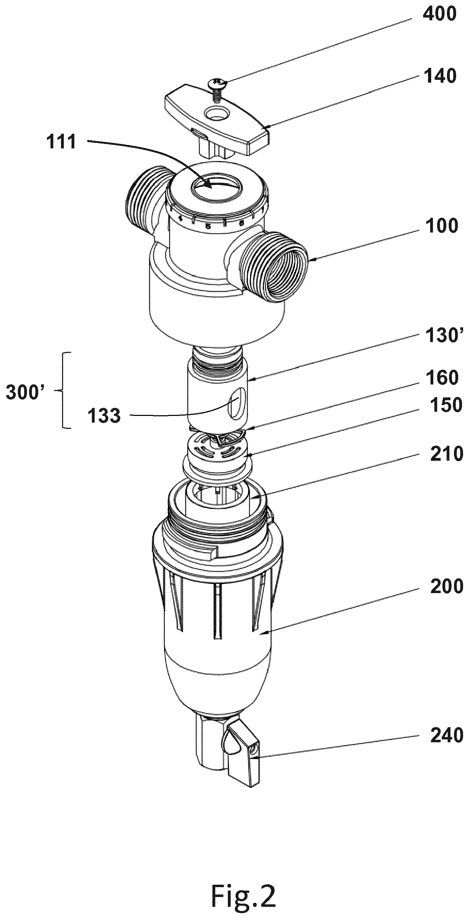

With reference to Figs.1 and 2, a pre-filter with a detachable filter core for un-interruptible water supply in accordance with the present invention includes a valve seat 100, a filter canister 200 and a valve member 300.

The valve member 300 is axially and rotatably mounted inside the valve seat 100, and a bottom portion of the valve member 300 is connected with the filter canister 200.

With reference to Figs. 1, 3 and 4, the valve seat 100 is integrally formed and includes an inlet port 110, an outlet port 120, a central bore 111 and a knob 140. The inlet port 110 and the outlet port 120 are respectively formed in two lateral sides of the valve seat 100, and the inlet port 110 is opposite to the outlet port 120. The inlet port 110 and the outlet port 120 having threads on an interior surface thereof that engage threads on an outer surface of a pipe or similar conduit. The central bore 111 is centrally formed through the valve seat 100 and communicating with the inlet port 110 and the outlet port 120. The knob 140 is mounted in the valve seat 100 by a fastener, such as a screw 400.

The valve member 300 is mounted into the central bore 111 of the valve seat 100 and the knob 140 is securely connected to a top portion of the valve member 300 by the screw 400 and is rotatable with respect the valve seat 100 for the valve member 300 to be rotated by turning the knob 140.

The filter canister 200 is detachably attached to a bottom of the valve seat 100, which removes sediment and other impurities from the water flowing through the filter canister 200, and includes a chamber, a filtering tube 210, a filtered water outlet 211, an inlet water chamber 220, a waste water outlet 230 and a waste water treatment valve 240. The chamber is defined within the filter canister 200.

The filtering tube 210 is hollow and is mounted inside the chamber of the filter canister 200, which removes sediment and other impurities from the water based on physical filtration means to block larger impurities, such as dirt, rust, algae and the like. The filtered water outlet 211 is formed through a top end of the filtering tube 210. The inlet water chamber 220 is defined between an inner wall of the chamber of the filter canister 200 and a peripheral wall of the filtering tube 210.

The waste water outlet 230 is formed through a bottom end of the filter canister 200, communicates with the inlet water chamber 220, and is connected with the waste water treatment valve 240, and water containing impurities flows out of the waste water treatment valve 240 through the waste water outlet 230.

There are two embodiments associated with the pre-filter with a detachable filter core for un-interruptible water supply in accordance with the present invention and differences between the two embodiments reside in the structure of the valve member 300 as elaborated as follows.

### Embodiment 1

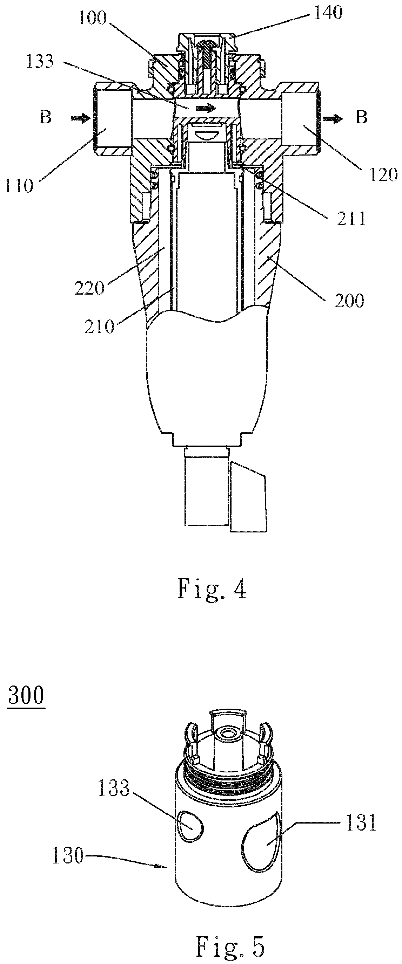

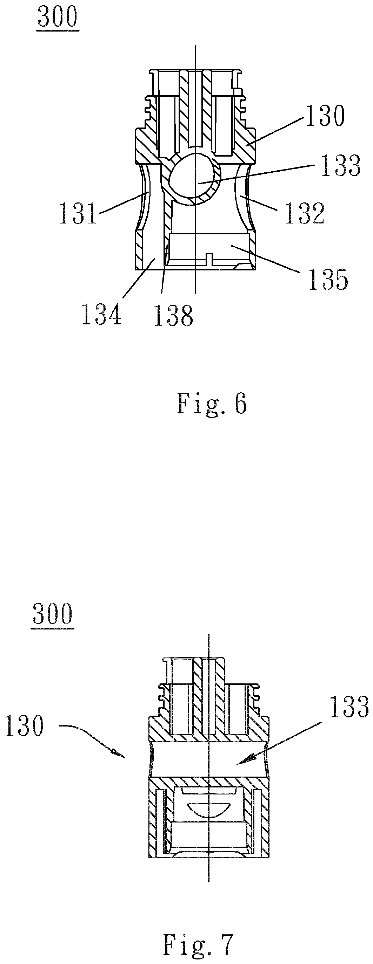

With reference to Figs. 5 to 7, the valve member 300 in embodiment 1 includes a body 130, an inlet opening 131, an outlet opening 132, a first flow chamber 134, a second flow chamber 135 and an unfiltered water channel 133. A bottom portion of the body 130 is hollow and a top portion of the body 130 is mounted inside the bottom portion of the valve seat 100. The inlet opening 131 and the outlet opening 132 are oppositely formed through a peripheral wall of the bottom portion of the body 130. The unfiltered water channel 133 is laterally formed through the peripheral wall of the bottom portion of the body 130. The unfiltered water channel 133 is aligned in a direction intersected with that of each of the inlet opening 131 and the outlet opening 132 facing, and preferably, the angle included between the direction of each of the inlet opening 131, outlet opening 132 facing and the aligning direction of the unfiltered water channel 133 is 90°. After the knob 140 is turned for the inlet opening 131 to be aligned and communicate with the inlet port 110 and for the outlet opening 132 to be aligned and communicate with the outlet port 120, a first water flow path for filtered water supply is formed. After the knob 140 is turned for both ends of the unfiltered water channel 133 to be respectively aligned with the inlet port 110 and the outlet port 120 of the valve seat 100, a second water flow path for unfiltered water supply is formed.

An inner space of the bottom portion of the body 130 is divided into the first flow chamber 134 and the second flow chamber 135 partitioned by a vertical wall 138. The first flow chamber 134 is strip-shaped, and both ends of the first flow chamber 134 are respectively connected and communicate with the inlet opening 131 and the inlet water chamber 220 of the filter canister 200. The second flow chamber 135 communicates with the outlet opening 132 of the valve member 300 and the filtered water outlet 211 of the filter canister 200.

Two collar seals 136 are respectively mounted around a portion above the inlet opening 131 and a portion below the outlet opening 132 to hermetically seal water permeating from the unfiltered water channel 133, the inlet opening 131 and the outlet opening 132 when aligned with the inlet port 110 and the outlet port 120.

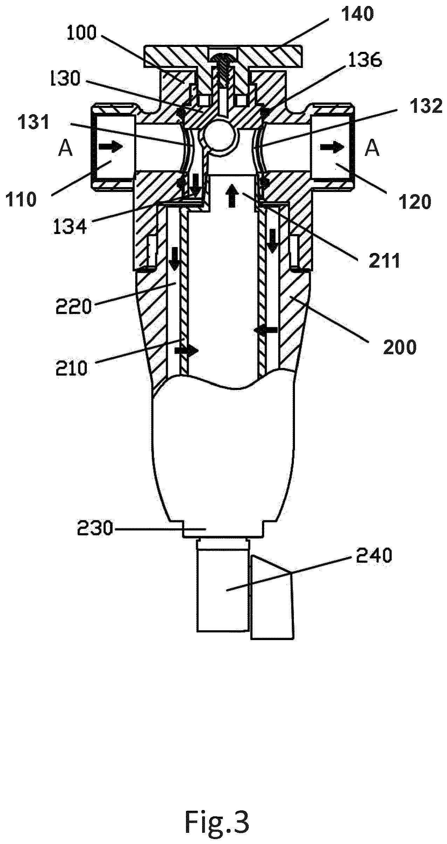

With reference to Fig. 3, before water filtration operation of the pre-filter, the inlet port 110 and the outlet port 120 are respectively connected to an incoming water pipe and water-receiving equipment For filtered water supply through the first water flow path, the knob 140 is turned to rotate the body 130 of the valve member 300 to a filtering position with the inlet opening 131 and the outlet opening 132 of the valve member 300 respectively aligned and communicating with the inlet port 110 and the outlet port 120 of the valve seat 100 to establish the first water flow path for water from the incoming water pipe to flow through the inlet port 110 of the valve seat 100 and the inlet opening 131 and the first flow chamber 134 into the inlet water chamber 220 of the filter canister 200. The sediment and other impurities in the water are screened out by the filtering tube 210 and water containing the sediment and impurities flows out through the waste water outlet 230. The filtered water passes through the filtering tube 210 and flows out of the outlet port 120 through the filter water outlet 211, the second flow chamber 135, the outlet opening 132 to supply the water-receiving equipment.

With reference to Fig. 4, the valve member 200 of the pre-filter overcomes the problem of water supply interrupted by detaching filter core for cleaning or replacement when the pre-filter is positioned at a bypass position. For unfiltered water supply through the second water flow path, the knob 140 is turned to rotate the body 130 of the valve member 300 to the bypass position with both ends of the unfiltered water channel 133 respectively aligned and communicating with the inlet opening 131 and outlet opening 132 to establish the second water flow path for water from the incoming water pipe to flow in the pre-filter through the inlet port 110 and then flow out of the pre-filter through the unfiltered water channel 133 and outlet port 120. When the pre-filter stays at the bypass position, unfiltered water continuously flows through the valve seat 100 without passing through the valve member 200 to a household or commercial environment without interruption even when the valve member 200 is detached for cleaning or replacement.

### Embodiment 2

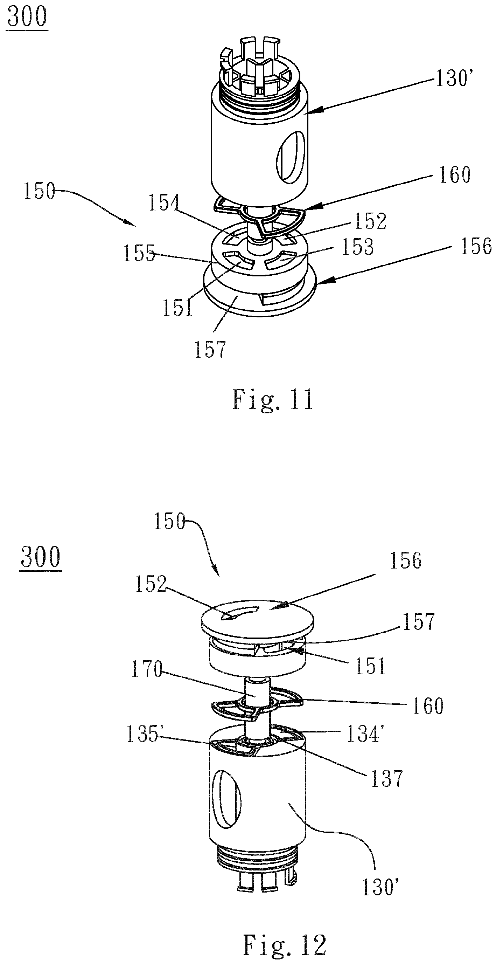

With reference to Figs. 2 and 12, the valve member 300' in embodiment 2 includes a body 130', a moveable valve 150, a gasket 160 and a rotation shaft 170.

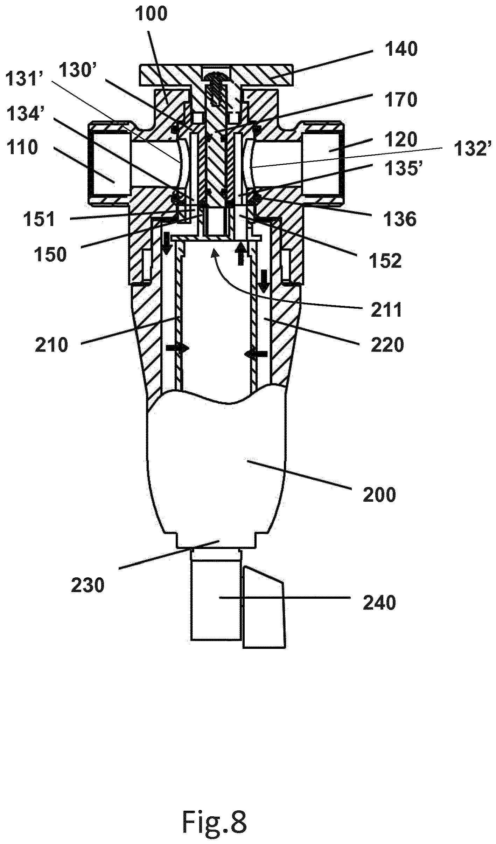

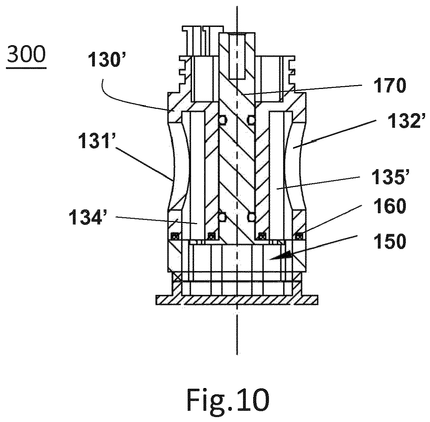

With reference to Figs. 10 to 12, the body 130' is mounted inside the valve seat (100) and includes an inlet opening 131', an outlet opening 132', a first flow chamber 134', a second flow chamber 135', a shaft bore 136 (with reference Fig. 8) and a gasket-receiving slot 137. The inlet opening 131' and the outlet opening 132' are respectively and oppositely formed through a peripheral wall of a bottom portion of the body 130'. The inlet opening 131' is connected and communicates with the inlet port 110. The outlet opening 132' is connected and communicates with the outlet port 120. As the first flow chamber 134' and the second flow chamber 135' are structurally similar to the first flow chamber 134 and the second flow chamber 135 of the foregoing embodiment, description of the first flows chamber 134' and the second flows chamber 135' is not repeated here. The shaft bore 135 is centrally formed through the body 130'. The gasket-receiving slot 137 is formed in a bottom of the body 130'.

The moveable valve 150 is mounted on the bottom of the body 130', and has an upper portion 155 and a lower portion 156. The upper portion 155 of the moveable valve 150 is rotatably mounted on a bottom of the body 130'.

The moveable valve 150 has a first recess 151, a second recess 152, a third recess 153, a fourth recess 154 and a breach 157. The breach 157 is formed in a peripheral wall of the lower portion 156. The first recess 151 and the second recess 152 are oppositely formed through the upper potion 155, the first recess 151 is formed through the upper portion 155 and communicates with the breach 157 and the inlet water chamber 220 of the filter canister 200, and the second recess 152 is formed through the upper portion 155 and the lower portion 156 and communicates with the filtered water outlet 211 of the filter canister 200. The third recess 153 and the fourth recess 154 are formed in a top surface of the upper portion 155, are oppositely located between the first recess 151 and the second recess 152, and communicate with each other. After the knob 140 is turned to rotate the movable valve 150 for the first recess 151 to communicate with the inlet opening 131' of the body 130' and for the second recess 152 to communicate with the outlet opening 132' of the body 130', a first water flow path for filtered water supply is formed. After the knob 140 is turned to rotate the movable valve 150 for the third recess 153 to communicate with the inlet opening 131' of the body 130' and for the fourth recess 154 to communicate with the outlet opening 132' of the body 130', a second water flow path for unfiltered water supply is formed.

The gasket 160 is received in the gas-receiving slot 137 to form hermetic seal between the body 130' and the moveable valve 150.

The rotation shaft 170 is securely mounted through the shaft bore 136 of the body 130' (with reference Fig. 8). A bottom end of the rotation shaft 170 is mounted in the moveable valve 150, and a top end of the rotation shaft 170 is securely mounted in the knob 140 by a fastener such as a screw 400. Thus, when the knob 140 is turned, the movable valve 150 is rotatable with respect to the body 130'.

With reference to Fig. 8, the before operation of the pre-filter, the inlet port 110 and the outlet port 120 are respectively connected to an incoming water pipe and water-receiving equipment. For filtered water supply through the first water flow path, the knob 140 is turned to rotate the movable valve 150 to a filtering position with the first recess 151 and the second recess 152 of the movable valve 150 respectively aligned and communicating with the first flow channel 134' and the second flow channel 135' of the body 130' to establish the first water flow path for water from the incoming water pipe to sequentially flows through the inlet port 110 of the valve seat 100, the inlet opening 131', the first water flow channel 134' and the first recess 151, and then flow into the inlet water chamber 220 of the filter canister 200. The sediment and other impurities in the water are screened out by the filtering tube 210 and water containing the sediment and impurities flows out through the waste water outlet 230. The filtered water passes through the filtering tube 210 and flows out of the outlet port 120 through the second recess 152 of the moveable valve 150, and the outlet opening 132' of the body 130'.

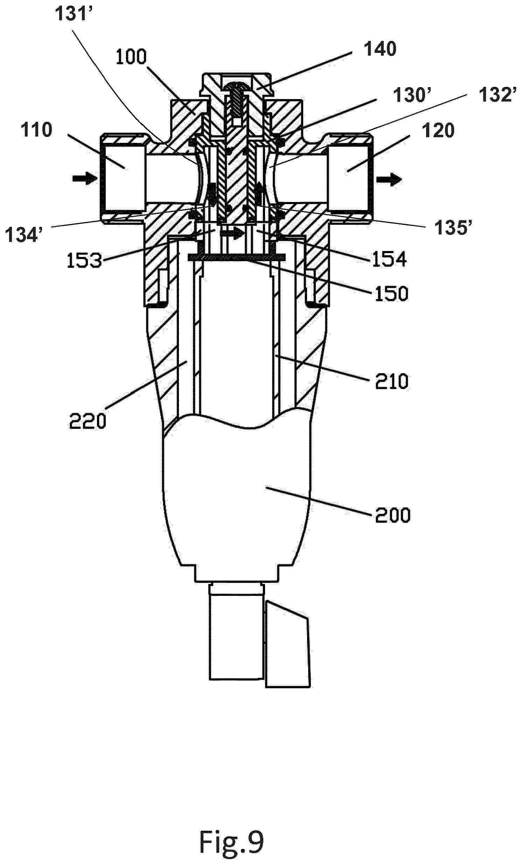

With reference to Fig. 9, the valve member 200 of the pre-filter overcomes this problem of water supply interrupted by detaching filter core for cleaning or replacement when the pre-filter is positioned at a bypass position. For unfiltered water supply through the second water flow path, the knob 140 is turned to rotate the movable valve 150 of the valve member 300 to the bypass position with the third recess 153 and the fourth recess 154 of the movable valve 150 respectively aligned and communicating with the first flow channel 134' and the second flow channel 135' of the body 130' to establish the second water flow path for water from the incoming water tube to flows in the pre-filter through the inlet port 110, the inlet opening 131', the first flow chamber 134' and the third recess 153 and then flows out of the pre-filter sequentially through the fourth recess 154, the second flow chamber 135', the outlet opening 132' and o the outlet port 120. When the pre-filter stays at the bypass position, unfiltered water continuously flows through the valve seat 100 without passing through the valve member 200 to a household or commercial environment without interruption even when the valve member 200 is detached for cleaning or replacement.

The present invention therefore has two water flow paths which allow the incoming water to be completely filtered or directly passing through without being unfiltered to avoid inconvenient interruption in the water supply.

Even though numerous characteristics and advantages of the present invention have been set forth in the foregoing description, together with details of the structure and function of the invention, the disclosure is illustrative only. Changes may be made in detail, especially in matters of shape, size, and arrangement of parts within the principles of the invention to the full extent indicated by the broad general meaning of the terms in which the appended claims are expressed.

## Claims

1. A pre-filter with a detachable filter core for un-interruptible water supply, comprising:
a valve seat (100) including an inlet port (110) and an outlet port (120);
a filter canister (200) detachably attached to a bottom of the valve seat (100) and including: a chamber defined within the filter canister (200);
a filtering tube (210) being hollow and mounted inside the chamber of the filter canister (200);
a filtered water outlet (211) formed through a top end of the filtering tube (210); and
an inlet water chamber (220) defined between the inner wall of the chamber of the filter canister (200) and a peripheral wall of the filtering tube (210); and
a switching mechanism rotatably mounted into the valve seat (100);
wherein the switching mechanism is selectively switched to form a filtering position with the inlet port (110) of the valve seat (100) communicating with the inlet water chamber (220) of the filter canister (200) and the filtered water outlet (211) communicating with the outlet port (120) of the valve seat (100); and the switching mechanism is selectively switched to form a bypass position with the inlet port (110) of the valve seat (100) directly communicating with the outlet port (120) of the valve seat (100).

2. The pre-filter with a detachable filter core for un-interruptible water supply as claimed in claim 1, wherein the switching mechanism includes a valve member (300) rotatably mounted inside the valve seat (100) and including:
a body (130);
an inlet opening (131) and an outlet opening (132) formed through a peripheral wall of the body (130) and respectively communicating with the inlet water chamber (220) and the filtered water outlet (211) of the filter canister (200);
an unfiltered water channel (133) laterally formed through the peripheral wall of the body (130); and
wherein the switching mechanism is selectively turned to rotate the body (130) to a filtering position or a bypass position, in the filtering position the inlet opening (131) and the outlet opening (132) are respectively aligned and communicate with the inlet port (110) and the outlet port (120) of the valve seat (100), and in the bypass position both ends of the unfiltered water channel (133) are respectively aligned and communicate with the inlet port (110) and the outlet port (120).

3. The pre-filter with a detachable filter core for un-interruptible water supply as claimed in claim 2, wherein an inner space of the bottom portion of the body (130) is divided into a first flow chamber (134) and a second flow chamber (135);
Wherein the first flow chamber (134) has both ends respectively connected and communicating with the inlet opening (131) and the inlet water chamber (220) of the filter canister (200); and
the second flow chamber (135) communicates with the outlet opening (132) of the valve member (300) and the filtered water outlet (211) of the filter canister (200).

4. The pre-filter with a detachable filter core for un-interruptible water supply as claimed in claim 3, wherein the inlet opening (131) and the outlet opening (132) of the body are opposite to each other, and the unfiltered water channel (133) is aligned in a direction intersected with that of each of the inlet opening 131 and the outlet opening 132 facing.

5. The pre-filter with a detachable filter core for un-interruptible water supply as claimed in claim 2, wherein the valve member (300) is mounted a central bore (111) centrally formed through the valve seat (100) and communicating with the inlet port 110 and the outlet port 120, two collar seals (136) are respectively mounted around a portion above the inlet opening (131) and a portion below the outlet opening (132) to hermetically seal water permeating from the unfiltered water channel (133), the inlet opening (131) and the outlet opening (132) when aligned with the inlet port (110) and the outlet port (120), and the switching mechanism includes a knob (140) securely connected to a top portion of the valve member (300) and is turned to rotate the valve member (300).

6. The pre-filter with a detachable filter core for un-interruptible water supply as claimed in claim 1, wherein the switching mechanism includes a valve member (300') mounted inside the valve seat (100) and including:
a body (130');
an inlet opening (131) formed through a peripheral wall of the body (130) and connected and communicating with the inlet port (110) of the valve seat (100);
an outlet opening (132) formed through the peripheral wall of the body (130) and communicating with the outlet port (120) of the valve seat (100);
a first flow chamber (134') with both ends respectively connected and communicating with the inlet opening (131) and the inlet water chamber (220) of the filter canister (200); and
the second flow chamber (135') communicating with the outlet opening (132) of the valve member (300) and the filtered water outlet (211) of the filter canister (200);
a moveable valve (150) mounted on the bottom of the body (130);
an upper portion (155) and a lower portion (156) with the upper portion (155) rotatably mounted on the bottom of the body (130');
a first recess (151) formed through the upper potion (155) and communicating with the inlet water chamber (220) of the filter canister (200);
a second recess (152) formed through the upper potion (155) and the lower portion (156) and communicating with the filtered water outlet (211) of the filter canister (200);
a third recess (153) formed in the upper potion (155) and located between the first recess (151) and the second recess (152);
a fourth recess (154) formed in the upper potion (155), located between the first recess (151) and the second recess (152), and communicating with the third recess (153); and
a breach (157) formed in a peripheral wall of the lower portion (156), and communicating with the first recess (151); and
wherein the switching mechanism is selectively turned to rotate the moveable valve (150) to a filtering position or a bypass position, in the filtering position the first recess 151 is aligned and communicates with the first flow chamber (134) and the second recess (152) is aligned and communicates with the second flow chamber (135), and in the bypass position the third recess (153) is aligned and communicates with the first flow chamber (134) and the fourth recess (154) is aligned and communicates with the second flow chamber (135).

7. The pre-filter with a detachable filter core for un-interruptible water supply as claimed in claim 6, wherein the first recess (151) and the second recess (152) are oppositely arranged, the third recess (153) and the fourth recess (154) are oppositely arranged, wherein the first recess (151), the second recess (152), the third recess (153), the fourth recess (154) are spaced apart from one another by a right angle.

8. The pre-filter with a detachable filter core for un-interruptible water supply as claimed in claim 7, wherein the body (130') has a gasket-receiving slot (137), and a gasket (160) is mounted between the body (130') of the valve member (300) and the movable valve (150) and is received in the gasket-receiving slot (137).

9. The pre-filter with a detachable filter core for un-interruptible water supply as claimed in claim 8, wherein the body (130') has a shaft bore (136) centrally formed through the body (130'), an rotation shaft (170) is securely mounted through the shaft bore (136) of the body (130') and has a top end and a bottom end, the bottom end of the rotation shaft (170) mounted in the movable valve (150) and the top end of the rotation shaft (170) securely mounted in the knob (140).

10. The pre-filter with a detachable filter core for un-interruptible water supply as claimed in claim 1, wherein the filter canister (200) has:
a waste water outlet (230) formed through a bottom end of the filter canister (200), communicating with the inlet water chamber (220); and
a waste water treatment valve (240) connected with the waste water outlet (230) for water containing impurities flows out of the waste water treatment valve (240) through the waste water outlet (230).
